# EUROPÄISCHE PATENTANMELDUNG

(11) **EP 0 761 861 A1**
(43) Veröffentlichungstag der Anmeldung: **12.03.1997**
(21) Anmeldenummer: 96114226.2
(22) Anmeldetag: 05.09.1996
(51) Int. Cl.: D05B 69/12

(54) **Anbau-Motor für Nähmaschinen**

(30) Priorität: 08.09.1995 DE 29514444 U; 14.03.1996 DE 29604747 U
(71) Anmelder: Frankl & Kirchner GmbH. & Co. KG Fabrik für Elektromotoren und elektrische Apparate, D-68723 Schwetzingen (DE)
(72) Erfinder: Ripplinger, Walter, 68794 Rheinhausen (DE)
(74) Vertreter: Rau, Manfred, Dr. Dipl.-Ing.

(57) **Zusammenfassung**

Ein Anbau-Motor (8) für eine Nähmaschine weist ein Motor-Gehäuse (11) mit einem aus diesem herausragenden Antriebs-Wellenzapfen (13) auf. Dem Antriebs-Wellerzapfen (13) ist ein Gehäuse-Flansch (12) zugeordnet, an dem ein Adapter-Flansch (2o) angebracht ist.

## Beschreibung

Die Erfindung betrifft einen Anbau-Motor für Nähmaschinen.

Derartige Anbau-Motoren werden üblicherweise am Gehäuse von Nähmaschinen angebaut, so daß die Achse des Motors und die Achse der Armwelle der Nähmaschine parallel zueinander verlaufen. Die Drehmomentenübertragung erfolgt mittels eines Zahnriementriebes, wozu auf einem aus dem Motor-Gehäuse des Anbau-Motors herausragenden Antriebs-Wellenzapfen ein Zahnriemenritzel befestigt wird. Das Zahnriemenritzel und ein zugeordnetes, auf der Armwelle der Nähmaschine angebrachtes Zahnriemenrad liegen fluchtend zueinander. Der Anbau-Motor wird an einer Trageinrichtung, in der Regel einer Tragplatte, befestigt, die wiederum am Gehäuse der Nähmaschine angebracht ist. An serienmäßigen Anbau-Motoren sind sehr kleine, in der Regel quadratische Gehäuse-Flansche ausgebildet, deren Seitenkanten etwa tangential zur Außenkontur des Motor-Gehäuses verlaufen, so daß nur im Bereich der Ecken der Seitenkanten über das Motor-Gehäuse überstehende Bereiche vorhanden sind, wo Bohrungen bzw. Gewindebohrungen zur Befestigung des Anbau-Motors an der Trageinrichtung ausgebildet werden können. Da die Zahnriemenritzel in der Regel einen die Außenkontur des Motors überragenden Durchmesser aufweisen, ist eine direkte Befestigung der Anbau-Motoren an den erwähnten Tragplatten von der Seite des Zahnriemenritzels her nicht möglich, da ein Spannen der Zahnriemen durch Verschieben des Anbau-Motors relativ zur Nähmaschine und ein anschließendes Festschrauben des Anbau-Motors nicht möglich ist, da die Bohrungen des Gehäuse-Flansches von dem Zahnriemenritzel überdeckt werden. Aus diesem Grunde ist es üblich, auf den Gehäuse-Flansch einen größeren Adapterflansch aufzuschrauben, der das Zahnriemenritzel überragt, so daß nach der vollständigen Montage ein Spannen des Zahnriemens und ein anschließendes endgültiges Festschrauben des Anbau-Motors an der Tragplatte möglich ist. In zahlreichen Fällen herrschen an Nähmaschinen, und zwar insbesondere an gewerblichen Nähmaschinen, und zwar insbesondere solchen für den industriellen Einsatz, sehr enge Einbauverhältnisse, da an der Nähmaschine zahlreiche Funktionselemente montiert sind. Es handelt sich hierbei um Elemente für besondere Funktionen der Nähmaschine, wie beispielsweise Fußlüftung. Diese zusätzlichen Funktionselemente lassen es nicht zu, daß bei einer vorgegebenen Gesamtlänge eines Anbau-Motors noch zusätzlich ein Adapterflansch vor die Stirnseite des Gehäuse-Flansches gesetzt wird, ohne die Gesamtlänge des Motors zu vergrößern.

Der Erfindung liegt daher die Aufgabe zugrunde, einen Anbau-Motor mit Adapterflansch so auszugestalten, daß die Gesamtlänge des Anbau-Motors durch den zusätzlichen Adapterflansch nicht vergrößert wird.

Diese Aufgabe wird erfindungsgemäß durch die Merkmale im Anspruch 1 gelöst. Der Kern der Erfindung besteht darin, daß der Adapterflansch so ausgestaltet ist, daß er von der dem Austritt des Antriebs-Wellenzapfens entgegengesetzten Ende, gleichsam also vom hinteren Ende des Motors her, über das Motor-Gehäuse geschoben wird und den Gehäuses-Flansch in sich aufnimmt.

Die Aufgabe wird erfindungsgemäß weiterhin durch die Merkmale im Anspruch 2 gelöst. Der Kern dieser Erfindung besteht darin, daß der Adapterflansch durch Teilung so ausgestaltet ist, daß seine Flanschteile seitlich und zwar hinter dem Gehäuse-Flansch über das Motor-Gehäuse geschoben und dort zu einem Adapterflansch vereinigt werden. Letzterer wird dann ebenfalls von hinten über den Gehäuse-Flansch des Motor-Gehäuses geschoben und mit diesem verbunden.

Die Unteransprüche geben vorteilhafte Ausgestaltungen wieder.

Weitere Merkmale, Einzelheiten und Vorteile der Erfindung ergeben sich aus der nachfolgenden Beschreibung zweier Ausführungsbeispiele anhand der Zeichnung. Es zeigt
- Fig. 1: einen Teil einer Nähmaschine mit einem Anbau-Motor in Draufsicht,
- Fig. 2: eine Stirnansicht der Nähmaschine mit Anbau-Motor gemäß dem Sichtpfeil II in Fig. 1,
- Fig. 3: den Anbau-Motor in einer Darstellung entsprechend dem Sichtpfeil III in Fig. 1 in teilweise aufgebrochener Darstellung,
- Fig. 4: eine zweite Ausführungsform eines Adapterflansches in Draufsicht,
- Fig. 5: einen Schnitt durch den Adapterflansch entsprechend der Schnittlinie V-V- in Fig. 4 und
- Fig. 6: einen Schnitt durch den Adapterflansch entsprechend der Schnittlinie VI-VI in Fig. 4.

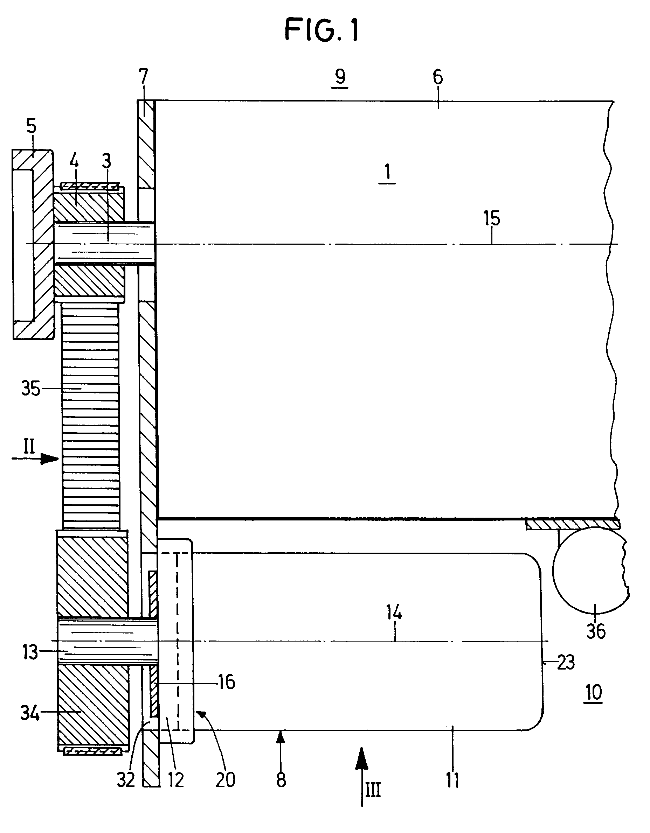

Bei der in Fig. 1 dargestellten Nähmaschine 1 handelt es sich um eine sogenannte Überwendlich-Nähmaschine, die auf einer Tischplatte 2 eines Nähmaschinen-Tisches angebracht ist. Die Nähmaschine 1 weist eine Antriebswelle 3 auf, auf der ein Zahnriemenrad 4 und ein Handrad 5 angebracht sind, und zwar außerhalb des Gehäuses 6 der Nähmaschine 1, aus dem die Antriebswelle 3 herausragt. Am Gehäuse 6 ist eine Tragplatte 7 für einen Anbau-Motor 8 befestigt, die sich seitlich und - bezogen auf die Bedienungsseite 9 - zur Rückseite 10 der Nähmaschine 1 erstreckt.

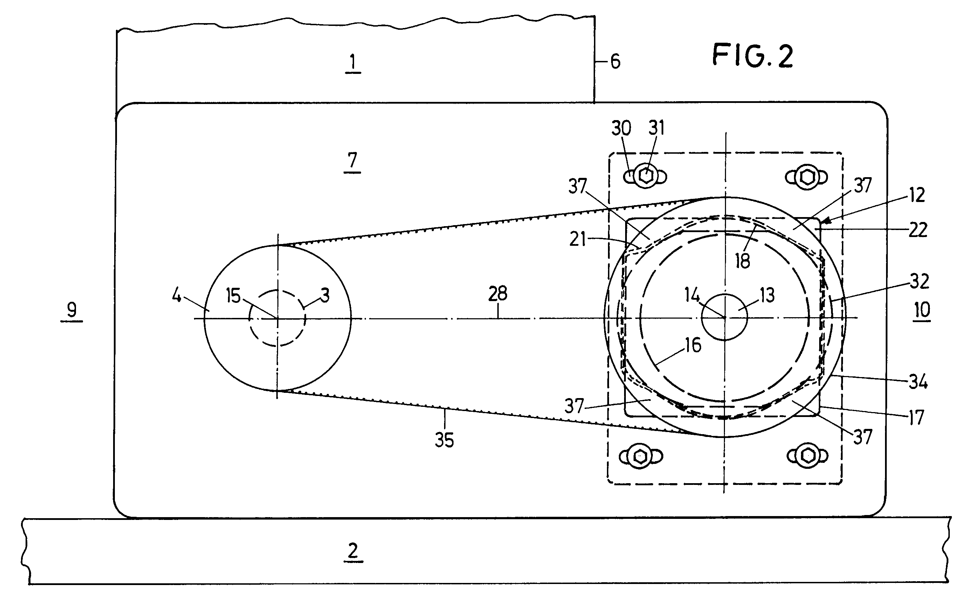

Der Anbau-Motor 8 weist ein Motor-Gehäuse 11 auf. An einem Ende ist er in der üblichen Weise mit einem einstückig mit dem Gehäuse 11 verbundenen etwa quadratischen Gehäuse-Flansch 12 versehen. Aus diesem Flansch 12 tritt konzentrisch ein Antriebs-Wellenzapfen 13 aus dem Motor-Gehäuse 11 heraus. Die Motorachse 14 und die Achse 15 der Antriebswelle 3 der Nähmaschine 1 verlaufen parallel zueinander. Konzentrisch zur Motorachse 14 ist am Gehäuse-Flansch 12 ein von diesem vorspringender Zentrier-Ringsteg 16 ausgebildet. Wie Fig. 2 entnehmbar ist, verlaufen die Seitenkanten 17 des Gehäuse-Flansches 12 jeweils etwa tangential zur Außenkontur 18 des Gehäuses 11. Lediglich in den Eckbereichen der Seitenkanten 17 steht der Flansch 12 über die Außenkontur 18 des Gehäuses 11 vor. In diesen Bereichen ist jeweils eine außerhalb der Außenkontur 18 liegende Bohrung 19 im Flansch 12 ausgebildet.

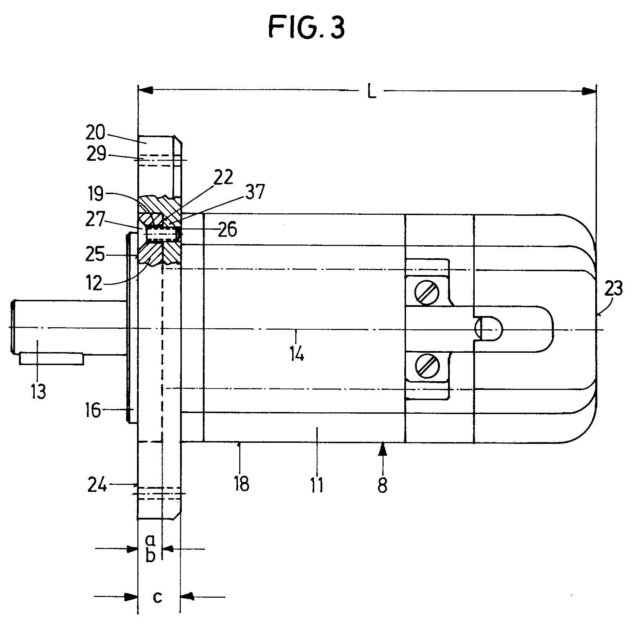

Zur Befestigung des Anbau-Motors 8 an der Tragplatte 7 ist ein Adapterflansch 20 vorgesehen, der eine Öffnung 21 aufweist, die in ihrer Formgebung der Außenkontur 18 des Motor-Gehäuses 11 angepaßt ist. Des weiteren weist der Adapterflansch 20 eine Vertiefung 22 auf, deren Tiefe a der Dicke b des Gehäuse-Flansches 12 entspricht. Aufgrund der geschilderten Ausgestaltung kann der Adapterflansch 20 von der dem Wellenzapfen 13 entgegengesetzten Seite 23 des Motor-Gehäuses 11 über letzteres geschoben werden, bis die Vertiefung 22 den Gehäuse-Flansch 12 aufnimmt und die Anlagefläche 24 des Adapterflansches 20 bündig mit der Stirnseite 25 des Gehäuse-Flansches 12 liegt, wie Fig. 3 entnehmbar ist. Im Adapterflansch 20 sind Gewindebohrungen 26 ausgebildet, die fluchtend mit den Bohrungen 19 im Flansch 12 liegen, so daß der Adapterflansch 20 und der Gehäuse-Flansch 12 mittels Senkkopf-Schrauben 27 miteinander verbunden werden können, die nicht über die Stirnseite 25 des Gehäuse-Flansches 12 vorstehen. Die Gesamtdicke c des Adapterflansches 20 ist deutlich größer als die Tiefe a bzw. die Dicke b.

An dem Adapterflansch 20 sind außerhalb der Außenkontur 18 des Motor-Gehäuses 11 und jeweils in ausreichendem Abstand von der gemeinsamen Ebene 28 der Achsen 14 und 15 Gewindebohrungen 29 ausgebildet. In der Tragplatte 7 sind deckungsgleich mit den Gewindebohrungen 29 parallel zur Ebene 28 verlaufende Langlöcher 30 ausgebildet, durch die Befestigungsschrauben 31 hindurch in die Gewindebohrungen 29 geschraubt werden. Der Antriebs-Wellenzapfen 13 durchsetzt eine Langloch-Ausnehmung 32 in der Tragplatte 7. Der Zentrier-Ringsteg 16 ragt in diese Ausnehmung 32 in der Tragplatte 7 hinein, so daß nach dem Ansetzen des Anbau-Motors 8 samt Adapterflansch 20 an die Tragplatte 7 die Anlagefläche 24 an der Tragplatte 7 anliegt. Anschließend werden die Gewindeschrauben 31 in der angesprochenen Weise angeschraubt. Es wird weiterhin ein Zahnriemenritzel 34 drehfest auf dem Wellenzapfen 13 befestigt und ein Zahnriemen 35 über das Zahnriemenrad 4 und das Zahnriemenritzel 34 gelegt. Anschließend wird der Anbau-Motor 8 vom Gehäuse 6 der Nähmaschine 1 weggeschoben, bis der Zahnriemen 35 gespannt ist. Anschließend werden die Befestigungsschrauben 31 festgezogen. Da das Spannen des Zahnriemens 35 erst nach der Montage des Zahnriemenritzels 34 auf dem Wellenzapfen 13 erfolgen kann, müssen die Langlöcher 30 und die Gewindebohrungen 29 außerhalb der Umrandung des Zahnriemenritzels 34 mit Zahnriemen 35 liegen, was überhaupt den Einsatz eines Adapterflansches 20 bedingt.

Wie Fig. 1 entnehmbar ist, befindet sich unmittelbar benachbart zu der dem Wellenzapfen 13 entgegengesetzten Seite 23 des Motor-Gehäuses 11 am Gehäuse 6 der Nähmaschine 1 ein Funktionsteil 36 der Nähmaschine 1, wobei es sich im vorliegenden Fall um einen Pneumatik-Zylinder für eine Fußlüftung der Nähmaschine 1 handelt. Dieses Funktionsteil 36 erstreckt sich hinter die Seite 23 des Gehäuses 11, so daß ein Anbau des Anbau-Motors 8 an die Tragplatte 6 nicht möglich wäre, wenn ein Adapterflansch 20 an die Stirnseite 25 des Gehäuse-Flansches 12 angesetzt worden wäre, da dann die Gesamtlänge L des Anbau-Motors 8 zu groß geworden wäre. Durch die geschilderte Ausgestaltung kann die Gesamtlänge L um 5 bis 10 mm verkürzt werden, was bei den beengten Einbauverhältnissen an Nähmaschinen für den gewerblichen, und zwar insbesondere industriellen Einsatz von erheblicher Bedeutung ist.

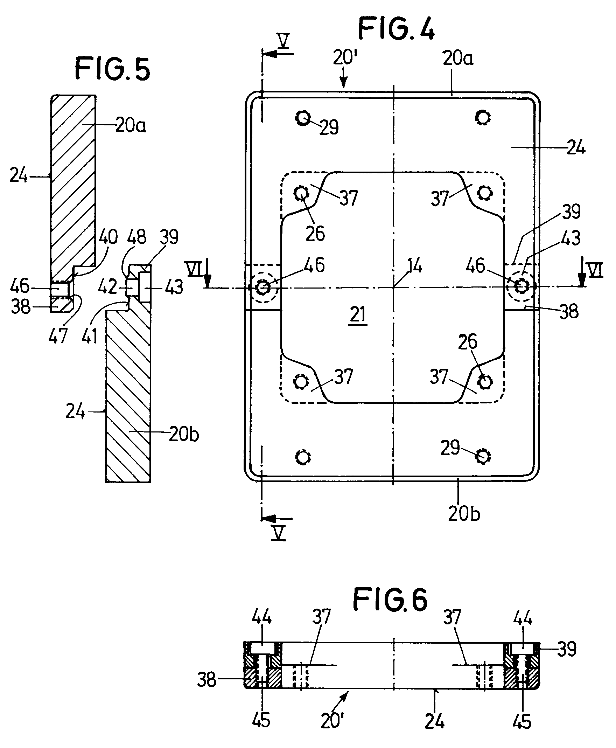

Es kann in der Praxis vorkommen, daß am Motor-Gehäuse 11 über dessen sonstiges Außenprofil hinausragende Vorsprünge ausgebildet sind, die ein Überschieben des Adapterflansches 20 von der Seite 23 her über das Motor-Gehäuse ausschließen. In solchen Fällen wird ein Aufschieben des Adapterflansches wegen der an diesem ausgebildeten, die Gewindebohrungen 26 tragenden, mit dem Gehäuse-Flansch 12 überlappende Eckabschnitte 37 behindert. Für solche Fälle ist in den Fig. 4 bis 6 ein Ausführungsbeispiel eines Adapterflansches 20' dargestellt, der mit dem Adapterflansch 20 in wesentlichen Teilen übereinstimmt. Identische Teile werden daher ohne erneute Beschreibung mit identischen Bezugsziffern bezeichnet; konstruktiv ähnliche Teile werden mit gleichen Bezugsziffern mit einem hochgesetzten Strich bezeichnet.

Der Adapterflansch 20' ist in einer durch die Motorachse 14 reichenden Mittelebene geteilt und besteht aus zwei Flanschteilen 20a und 20b. Jeder Flanschteil 20a und 20b ist mit einander überlappenden und sich gemeinsam zum vollständigen Querschnitt des Adapterflansches 20' ergänzenden komplementären Stegen 38, 39 versehen. Wenn die beiden Flanschteile 20a, 20b zum Adapterflansch 20' zusammengefügt sind, dann liegen die je zwei Stege 38, 39 mit zwei Paß- und Zentrier-Flächen 40, 41 aneinander. Jeder Steg 39 des Flanschteiles 20b weist eine Bohrung 42 auf, die auch eine Ausnehmung 43 für den Kopf 44 einer Verbindungsschraube 45 aufweist. Mit der Bohrung 42 fluchtend ist in jedem Steg 38 des Flanschteiles 20a eine Gewindebohrung 46 ausgebildet, in die eine Verbindungsschraube 45 nach dem Zusammenfügen der beiden Flanschteile 20a und 20b geschraubt wird, wie insbesondere aus Fig. 6 hervorgeht.

Aus Fig. 5 ist erkennbar, daß an der Paß- und Zentrier-Fläche 40 der Stege 38 - fluchtend mit der Gewindebohrung 46 - eine durch eine Senkbohrung gebildete Zentrierausnehmung 47 ausgebildet ist. Dieser entspricht ein in der Form angepaßter Zentriervorsprung 48, der an den Paß- und Zentrier-Flächen 41 jeweils fluchtend mit der Bohrung 42 ausgebildet ist. Dieser Zentriervorsprung 48 greift jeweils beim Zusammenfügen der Flanschteile 20a, 20b in die entsprechende Zentrierausnehmung 47 ein, wodurch die beiden Flanschteile 20a, 20b exakt in ihrer Lage zueinander festgelegt und damit zu einem stets gleichen Adapterflansch 20' gestaltet werden.

Zur Montage am Gehäuse-Flansch 12 des Motors 8 werden die beiden Flanschteile 20a , 20b seitlich, also quer zur Motorachse 14, über das Motor-Gehäuse 11 geschoben und in der geschilderten Weise mittels der Verbindungsschrauben 45 miteinander verbunden. Anschließend wird dieser Adapterflansch 20' an den Gehäuse-Flansch 12 geschraubt, wie bereits oben beschrieben.

## Patentansprüche

1. Anbau-Motor (8) für eine Nähmaschine (2),
- mit einem Motor-Gehäuse (11), das eine Außenkontur (18) aufweist,
- mit einem aus dem Motor-Gehäuse (11) herausragenden Antriebs-Wellenzapfen (13),
- mit einem dem Austritt des Antriebs-Wellenzapfens (13) aus dem Motor-Gehäuse (11) zugeordneten Gehäuse-Flansch (12), der eine Stirnseite (25) aufweist,
- mit einem Adapterflansch (20), der eine die Außenkontur (18) des Motor-Gehäuses (11) überdeckende Öffnung (21), eine den Gehäuse-Flansch (12) aufnehmende Vertiefung (22) und eine der Stirnseite (25) des Gehäuse-Flansches (12) zugeordnete Anlagefläche (24) aufweist, und
- mit den Gehäuse-Flansch (12) und den Adapterflansch (20) verbindenden Schrauben (27).

2. Anbau-Motor (8) für eine Nähmaschine (2),
- mit einem Motor-Gehäuse (11),
- mit einem aus dem Motor-Gehäuse (11) herausragenden Antriebs-Wellenzapfen (13),
- mit einem dem Austritt des Antriebs-Wellenzapfens (13) aus dem Motor-Gehäuse (11) zugeordneten Gehäuse-Flansch (12), der eine Stirnseite (25) aufweist,
- mit einem Adapterflansch (20'), der eine Öffnung (21), eine den Gehäuse-Flansch (12) aufnehmende Vertiefung (22) und eine der Stirnseite (25) des Gehäuse-Flansches (12) zugeordnete Anlagefläche (24) aufweist, und der aus zwei miteinander lösbar verbundenen Flanschteilen (20a, 20b) besteht, und
- mit den Gehäuse-Flansch (12) und den Adapterflansch (20') verbindenden Schrauben (27).

3. Anbau-Motor nach Anspruch 1 oder 2,
wobei die Anlagefläche (24) des Adapterflansches (20, 20') und die Stirnseite (25) des Gehäuse-Flansches (12) bündig miteinander ausgebildet sind.

4. Anbau-Motor nach Anspruch 1 oder 2,
wobei auf dem Antriebs-Wellenzapfen (13) ein Zahnriemenritzel (34) drehfest befestigbar ist, und
wobei außerhalb der Kontur des Zahnriemenritzels (34) am Adapterflansch (20, 20') Gewindebohrungen (29) für eine Befestigung an einer Trageinrichtung (7) einer Nähmaschine (1) ausgebildet sind.

5. Anbau-Motor nach Anspruch 2,
wobei die Flanschteile (20a, 20b) des Adapterflansches (20') mit einander komplementären Stegen (38, 39) versehen sind.

6. Anbau-Motor nach Anspruch 5,
wobei die Stege (38, 39) mit einander komplementären Paß- und Zentrier-Flächen (40, 41) versehen sind.

7. Anbau-Motor nach Anspruch 6,
wobei eine Paß- und Zentrier-Fläche (40) mit einer Zentrierausnehmung (47) und die zugeordnete andere Paß- und Zentrier-Fläche (41) mit einem in die Zentrierausnehmung (47) eingreifenden Zentriervorsprung (48) versehen ist.

8. Anbau-Motor nach einem der Ansprüche 5 bis 7,
wobei jeweils ein Steg (38) eines Flanschteiles (20a) mit einem Steg (39) des anderen Flanschteiles (20b) mittels einer Verbindungsschraube (45) verbunden ist.
